# EUROPÄISCHE PATENTANMELDUNG

(11) **EP 0 625 660 A2**
(43) Veröffentlichungstag der Anmeldung: **23.11.1994**
(21) Anmeldenummer: 94104262.4
(22) Anmeldetag: 18.03.1994
(51) Int. Cl.: F16K 15/02, F16L 37/092, F16K 15/04, F16N 23/00

(54) **Rückschlagventil**

(30) Priorität: 18.05.1993 DE 4316581
(71) Anmelder: Lincoln GmbH, D-69190 Walldorf (DE)
(72) Erfinder: Rodemer, Karl, D-69126 Heidelberg (DE); Paluncic, Zdravko, D-67346 Speyer (DE)
(74) Vertreter: KEIL & SCHAAFHAUSEN Patentanwälte

(57) **Zusammenfassung**

Die Erfindung bezieht sich auf ein Rückschlagventil mit einem in einen Medienauslaß einschraubbaren, einen Durchlaßkanal aufweisenden Ventilkörper und mit einem unter der Wirkung einer Rückstellfeder gegen einen in dem Durchlaßkanal vorgesehenen Ventilsitz gedrückten Verschlußkörper, sowie mit einer Anschlußeinrichtung für eine Auslaßleitung an den Ventilkörper, wobei die Anschlußeinrichtung ein Zangenelement aufweist, welches sich unter Einführung der Auslaßleitung an ihrem inneren Ende aufspreizt, welches innere Ende hinter einer Verengung des Durchlaßkanals angeordnet ist.

## Beschreibung

Die Erfindung betrifft ein Rückschlagventil, insbesondere für den Einsatz bei Schmiermittelverteilern vom Progressivverteilertyp mit einem in einen Medienauslaß, insbesondere den Schmiermittelauslaß eines Verteilerblocks einschraubbaren, einen Durchlaßkanal aufweisenden Ventilkörper und mit einem unter der Wirkung einer Rückstellfeder gegen einen in dem Durchlaßkanal vorgesehenen Ventilsitz gedrückten Verschlußkörper, sowie mit einer Anschlußeinrichtung für eine Auslaßleitung an den Ventilkörper.

Rückschlagventile werden beispielsweise bei Progressivverteilern eingesetzt, um einen sicheren und einwandfreien Transport des Schmiermittels zu anderen Verteilern oder zu Schmierstellen zu gewährleisten. Zum Anschließen von Schmiermittelleitungen an das Rückschlagventil werden derzeit Verschraubungen mit Schneidringen verwendet. Die Herstellung derartiger Verbindungen ist verhältnismäßig zeitaufwendig.

Aufgabe der vorliegenden Erfindung ist es, ein Rückschlagventil der eingangs genannten Art zu schaffen, mit welchem im Vergleich zu herkömmlichen Rückschlagventilen ein wesentlich schnellerer Anschluß einer Auslaßleitung, insbesondere von Schmiermittelleitungen an Progressivverteilern möglich ist.

Diese Aufgabe wird erfindungsgemäß im wesentlichen dadurch gelöst, daß die Anschlußeinrichtung ein Zangenelement aufweist, welches sich unter der Einführung der Auslaßleitung wenigstens an seinem inneren Ende aufspreizt, welches innere Ende hinter einer Verengung des Durchlaßkanals angeordnet ist.

Ein solches Rückschlagventil läßt eine schnelle und sichere Steckverbindung für die Auslaßleitung bei einfacher Ausgestaltung der Anschlußeinrichtung zu.

Das Zangenelement ist dabei im wesentlichen zylindrisch ausgebildet und das innere Ende mit in Längsrichtung verlaufenden über den Umfang verteilten Schlitzen versehen, so daß beim Einstecken der Anschlußleitung in das Zangenelement ein nach allen Seiten gleichmäßiges Aufspreizen des inneren Endes erfolgt und die Anschlußleitung nicht mehr ohne weiteres aus dem Zangenelement herausgezogen werden kann, weil das aufgespreizte Ende an der Verengung des Durchlaßkanals nicht mehr vorbeikommt. Um diese Arretierungswirkung zu unterstützen, kann das innere Ende des Zangenelements wenigstens bereichsweise hinter der Verengung des Durchlaßkanals nach außen abgewinkelt sein.

Wenn gemäß einem weiteren Erfindungsmerkmal dem inneren Ende des Zangenelements eine konische Begrenzungsfläche des sich in deren Bereich in Ventilauslaßrichtung verjüngenden Durchlaßkanals zugeordent ist, verfestigt sich die Steckverbindung mit einem Zug auf die Anschlußleitung noch zusätzlich.

Die konische Begrenzungsfläche kann ventileingangsseitig in den Grund einer Umfangsnut des Durchlaßkanals für die Aufnahme eines Dichtungsringes übergehen, um so die Abdichtung der Anschlußleitung gegenüber dem Ventilkörper zu verbessern.

Zur einfachen Montage und sicheren Funktion ist in weiterer Ausgestaltung der Erfindung die Rückstellfeder mit ihrem dem Verschlußkörper auf einem in dem Durchlaßkanal sitzenden Haltelement aufgenommen.

Dieses Haltelement kann etwa zylindrisch bis kegelförmig ausgebildet sein, um einerseits eine zentrische Abstützung des Verschlußkörpers zu gewährleisten und sich andererseits selbst gleichmäßig über seinen Umfang an dem Ventilgehäuse abstützen.

Dabei hat das Halteelement vorzugsweise einen federseitigen verjüngten Vorsprung für die Aufnahme der Rückstellfeder und ein federabgewandtes erweitertes Ende für die Abstützung an dem Ventilkörper.

Eine noch sicherere Positionierung des Haltelements in dem Durchflußkanal erhält man dann, wenn das erweiterte (obere) Ende des Haltelements durch eine Kraft in eine Nut des Ventilkörpers eingepreßt ist.

Ein weiteres Erfindungsmerkmal besteht darin, daß der Ventilkörper auf eine einlaßseitigen Ansatz unverlierbar einen konischen Klemmring zur Abdichtung des Medienauslasses, insbesondere Schmiermittelauslasses, gegenüber einem Verbindungskanal zu einem nachfolgenden Medienauslaß, insbesondere Schmiermittelauslaß, trägt. Dies ist insbesondere für Progressivverteiler von Vorteil. Wird der Klemmring nämlich bei der Montage vergessen, so kann es zu einer nicht definierbaren Dosierung kommen. Andererseits muß, wenn zwei Auslaßkanäle eines Progressivverteilers miteinander verbunden werden sollen, das Rückschlagventil zusammen mit dem Klemmring entfernt und der Schmiermittelauslaß mit einer Verschlußschraube verschlossen werden. Falls der Klemmring nicht entfernt oder durch Versehen zusammen mit der Verschlußschraube montiert wird, erfolgt eine Blokkade des Schmiermittelverteilers. Dadurch, daß erfindungsgemäß der Klemmring unverlierbar an dem Ventilkörper des Rückschlagventils gehalten ist, können derartige Fehlmontagen ausgeschlossen werden.

In diesem Zusammenhang wird weiterhin vorgeschlagen, daß der Ansatz eine Eindrehung für die Aufnahme des Klemmrings aufweist, welche von einem Kragen abgeschlossen ist. Hierdurch kann die Unverlierbarkeit des Klemmrings auf einfache Weise sichergestellt werden.

Weitere Ziele, Merkmale, Vorteile und Anwendungsmöglichkeiten der Erfindung ergeben sich aus der nachfolgenden Beschreibung von Ausführungsbeispielen anhand der Zeichnung. Dabei bilden alle beschriebenen und/oder bildlich dargestellten Merkmale für sich oder in beliebiger sinnvoller Kombination den Gegenstand der vorliegenden Erfindung auch unabhängig von ihrer Zusammenfassung in den Ansprüchen oder deren Rückbeziehung.

Es zeigen:
Fig. 1 eine (teilweise geschnittene) Ansicht eines die Erfindung aufweisenden Rückschlagventils, und
Fig 2 den Teilschnitt eines Verteilerblockes mit zwei Medienauslässen, in einem von welchen ein erfindungsgemäßes Rückschlagventil eingesetzt ist.

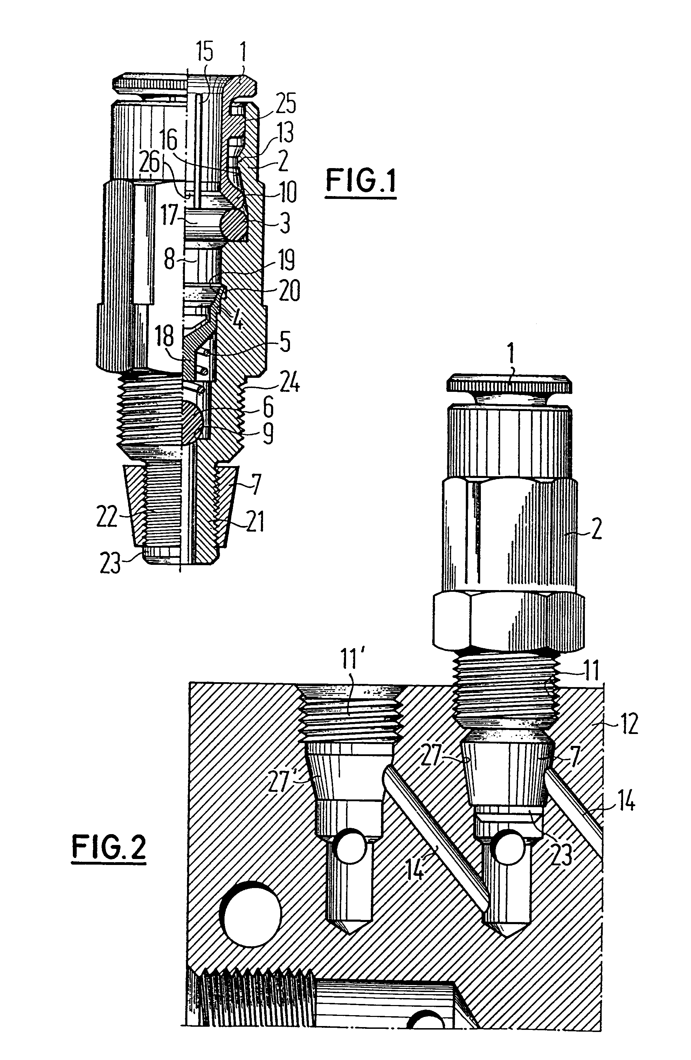

Das Rückschlagventil gemäß Fig. 1 ist für den Einsatz in einem Schmiermittel-Progressivverteiler bestimmt. Zu diesem Zweck wird es, wie aus Fig. 2 ersichtlich, mittels eines Außengewindes 24 an seinem einen Durchlaßkanal 8 bildenden Ventilkörper 2 in den Medienauslaß 11 eines Verteilerblocks 12 eingeschraubt. Ein Verteilerblock ist in der Regel mit einer Vielzahl derartiger Rückschlagventile ausgestattet. In dem Durchlaßkanal 8 befindet sich ein als Kugel ausgebildeter Verschlußkörper 6, welcher mittels einer Rückstellfeder 5 an einen Ventilsitz 9 gedrückt wird. Die Rückstellfeder 5 sitzt mit ihrem auslaßseitigen Ende auf dem verjüngten Vorsprung 18 eines insgesamt zylindrisch bis kegeligen Halteelements 4. Das auslaßseitige erweiterte Ende 19 des Halteelements 4 stützt sich in einer Nut 20 des Durchlaßkanals 8 ab. Die Rückstellfeder 5 ist somit zwischen Verschlußkörper 6 und Halteelement 4 eingespannt.

In dem Auslaßende des Durchlaßkanals 8 sitzt mit einem Umfangsflansch 25 passend ein hohlzylindrisches Zangenelement 1. Das innere, im Anschluß an den Umfangsflansch 25 diesem gegenüber verjüngte Ende ragt durch eine Verengung 13 des Durchlaßkanals 8 hindurch und ist jenseits, also einlaßseitig der Verengung 13 schräg nach außen abgewinkelt. Bis auf den äußeren Kopfbereich ist das Zangenelement 1 mit in Längsrichtung verlaufenden Schlitzen 15 ausgestattet, so daß sich beim Einstecken einer (nicht dargestellten) Anschlußleitung in das Zangenelement 1 dieses wenigstens endseitig nach außen aufspreizen kann. Damit legen sich die nach außen abgewinkelten Bereiche des inneren Endes 10 des Zangenelementes 1 an eine konische Begrenzungsfläche 16 des Durchlaßkanals 18, welcher sich in diesem Bereich zum Ventilauslaß hin verjüngt. Die konische Begrenzungsfläche 16 geht einlaßseitig in den Grund einer Umfangsnut 17 über, in welcher ein Dichtungsring 3 angeordnet ist, um die eingesteckte Anschlußleitung gegenüber dem Ventilkörper 2 abzudichten. Zur Herstellung der Verbindung braucht die Anschlußleitung also lediglich in das Zangenlement 1 weit genug, also wenigstens bis über den Dichtungsring 3, hineingeschoben zu werden, um abdichtend festgeklemmt zu werden. Zieht man dann an der Auslaßleitung oder wird die Zange wegen des Druckaufbaus im Durchlaßkanal über das Dichtungselmeent nach außen geschoben, so erhöht sich der Klemmsitz aufgrund der konischen Begrenzungsfläche 16 nur noch weiter. Damit bei einem Zug an der Auslaßleitung das Zangenelement 1 geringfügig axial nach außen mitgenommen wird, hat letzteres innen am Übergang von dem zylindrischen Bereich zu dem nach außen abgewinkelten Bereich des inneren Endes 10 einen Ringwulst 26.

Eingangsseitig hat der Ventilkörper 2 einen gegenüber dem Außengewinde 24 verjüngten Ansatz 21. Der Ansatz 21 hat eine Eindrehung 22, welche mit einem Kragen 23 abschließt. In der Eindrehung 22 ist ein konischer Klemmring 7 aufgenommen, welcher in einen entsprechend konischen Abschnitt 27 des Medienauslasses 11 des Verteilerblocks 12 paßt, in welchen ein Verbindungskanal 14 von dem benachbarten Medienauslaß 11 mündet. Die Funktion des Klemmrings 7 ist somit eine metallische Abdichtung zwischen dem Medienauslaß 11 und dem Verbindungskanal 14 zu dem benachbarten Medienauslaß. Durch die Anordnung des konischen Klemmrings 7 in der von dem Kragen 23 abgeschlossenen Eindrehung 22 ist der Klemmring 7 unverlierbar an dem Rückschlagventil gehalten.

### Bezugszeichenliste:

1 Zangenelement
2 Ventilkörper
3 Dichtungsring
4 Halteelement
5 Rückstellfeder
6 Verschlußkörper
7 Klemmring
8 Durchlaßkanal
9 Ventilsitz
10 inneres Ende
11 Medienauslaß
12 Verteilerblock
13 Verengung
14 Verbindungskanal
15 Schlitze
16 Begrenzungsfläche
17 Umfangsnut
18 Vorsprung
19 erweitertes Ende
20 Nut
21 Ansatz
22 Eindrehung
23 Kragen
24 Außengewinde
25 Umfangsflansch
26 Ringwulst
27 konischer Abschnitt

## Patentansprüche

1. Rückschlagventil, insbesondere für den Einsatz bei Schmiermittelverteilern vom Progressivverteilertyp, mit einem in einen Medienauslaß (11), insbesondere den Schmiermittelauslaß eines Verteilerblocks (12) einschraubbaren, einen Durchlaßkanal (8) aufweisenden Ventilkörper (2) und mit einem unter der Wirkung einer Rückstellfeder (5) gegen einen in dem Durchlaßkanal (8) vorgesehenen Ventilsitz (9) gedrückten Verschlußkörper (6), sowie mit einer Anschlußeinrichtung für eine Auslaßleitung an den Ventilkörper (2), dadurch gekennzeichnet, daß die Anschlußeinrichtung eine Zangenelement (1) aufweist, welches sich unter der Einführung der Auslaßleitung jedenfalls an seinem inneren Ende (10) aufspreizt, welches innere Ende (10) hinter einer Verengung (13) des Durchlaßkanals (8) angeordnet ist.

2. Rückschlagventil nach Anspruch 1, dadurch gekennzeichnet, daß das Zangenelement (1) im wesentlichen zylindrisch ausgebildet und das innere Ende (10) mit in Längrichtung verlaufenden Schlitzen (15) versehen ist.

3. Rückschlagventil nach Anspruch 1 oder 2, dadurch gekennzeichnet, daß dem inneren Ende (10) des Zangenelements (1) eine konische Begrenzungsfläche (16) des sich in deren Bereich in Ventilauslaßrichtung verjüngenden Durchlaßkanals (8) zugeordnet ist.

4. Rückschlagventil nach einem der Ansprüche 1 bis 3, dadurch gekennzeichnet, daß die konische Begrenzungsfläche (16) ventileingangsseitig in den Grund einer Umfangsnut (17) des Durchlaßkanals (8) für die Aufnahme eines Dichtungsrings (3) übergeht.

5. Rückschlagventil nach einem der Ansprüche 1 bis 4, dadurch gekennzeichnet, daß die Rückstellfeder (5) mit ihrem dem Verschlußkörper (6) abgewandten Ende auf einem in dem Durchlaßkanal (8) sitzenden Halterelement (4) aufgenommen ist.

6. Rückschlagventil nach Anspruch 5, dadurch gekennzeichnet, daß das Halteelement (4) etwa zylindrisch bis kegelförmig ausgebildet ist.

7. Rückschlagventil nach Anspruch 5 oder 6, dadurch gekennzeichnet, daß das Haltelement (4) einen federseitigen verjüngten Vorsprung (18) für die Aufnahme der Rückstellfeder (5) und eine federabgewandtes erweitertes Ende (19) für die Abstützung an dem Ventilkörper (2) hat.

8. Rückschlagventil nach einem der Ansprüche 5 bis 7, dadurch gekennzeichnet, daß sich das Haltelement (4) vorzugsweise mit seinem erweiterten Ende in einer Nut (2) des Durchlaßkanals (8) abstützt.

9. Rückschlagventil nach einem der Ansprüche 1 bis 8, dadurch gekennzeichnet, daß der Ventilkörper (2) auf einem einlaßseitigen Ansatz (21) unverlierbar einen konischen Klemmring (7) zur Abdichtung des Medienauslasses (11), insbesondere des Schmiermittelauslasses gegenüber einem Verbindungskanal (14) zu einem nachfolgenden Medienauslaß (11'), insbesondere Schmiermittelauslaß, trägt.

10. Rückschlagventil nach Anspruch 9, dadurch gekennzeichnet, daß der Ansatz (21) eine Eindrehung (22) für die Aufnahme des Klemmringes (7) aufweist, welche von einem Kragen (23) abgeschlossen ist.
